## Europäisches Patentamt

## European Patent Office

## Office européen des brevets

(11) Veröffentlichungsnummer: **0 156 225**
**B1**

(12) **EUROPÄISCHE PATENTSCHRIFT**

(45) Veröffentlichungstag der Patentschrift:
**12.04.89**

(51) Int. Cl.⁴: **B 60 D 1/14**

(21) Anmeldenummer: **85102718.5**

(22) Anmeldetag: **09.03.85**

(54) **Zugdeichsel für Anhänger.**

(30) Priorität: **24.03.84 DE 3410971**

(43) Veröffentlichungstag der Anmeldung:
**02.10.85 Patentblatt 85/40**

(45) Bekanntmachung des Hinweises auf die Patenterteilung:
**12.04.89 Patentblatt 89/15**

(84) Benannte Vertragsstaaten:
**AT BE DE FR GB IT NL SE**

(56) Entgegenhaltungen:
**DE-A- 2 402 262**

(73) Patentinhaber: **Bergische Achsenfabrik Fr. Kotz & Söhne, Am Ohlerhammer, D-5276 Wiehl 1 (DE)**

(72) Erfinder: **Dowe, Günther, Ing.-grad., Langwiese Gaderoth, D-5223 Nümbrecht (DE)**
Erfinder: **Homann, Hans-Wolfgang, Dr.-Ing., Dahlienstrasse 9, D-5276 Wiehl (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

ACTORUM AG

## Beschreibung

Gegenstand der Erfindung ist eine Zugdeichsel für Anhänger mit einem höhenverstellbaren Zwischenstück und einem daran befestigten Zugösenträger für eine drehbare Zugöse, wobei das Zwischenstück und der Zugösenträger mit entsprechend geformten und sich an Kupplungsflächen abstützenden Kupplungshälften zu einer Kupplung verbunden sind. Aus der DE-C-2 402 262 ist eine gattungsgemäße Zugdeichsel für Anhänger bekannt, bei der zwischen der Zugdeichsel und dem Zugösenträger ein höhenverstellbares Zwischenstück angeordnet ist, welches aus der Zugrichtung seitlich herausgebogen ist. Der Zugösenträger kann sternförmig ausgebildet sein und neben zwei Zugösen verschiedener Größe auch noch eine Kugelkopfkupplung tragen. Mit dieser bekannten Zugdeichsel ist es zwar schon möglich, die Höhenlage der Zugösen oder der Kugelkopfkupplung zu verändern, aber ein Einstellungsbereich mit extrem hoher oder auch niedriger Kupplungslage ist mit dieser bekannten Zugdeichsel nicht möglich.

Davon ausgehend liegt der Erfindung die Aufgabe zugrunde, eine einfach konstruierte Zugdeichsel für Anhänger zu schaffen, deren Zugöse sehr hoch und dicht über dem Boden in waagerechter Lage eingestellt werden kann.

Als Lösung dieser Aufgabe ist eine gattungsgemäße Zugdeichsel vorgesehen, bei welcher der Zugösenträger mit zwei Kupplungshälften mit senkrecht zueinander angeordneten Kupplungsflächen für eine wahlweise Verbindung mit der Kupplungshälfte des Zwischenstückes versehen ist, von denen eine Kupplungshälfte am rückwärtigen Ende eines Trägerstückes des Zugösenträgers und die andere Kupplungshälfte am Ende eines vom Trägerstück rückwärtig in einem spitzen Winkel abzweigenden Nebenträgerstückes des Zugösenträgers angeordnet ist.

Bei einer praktischen Ausführungsform können das Trägerstück und das Nebenträgerstück des Zugösenträgers annähernd gleich lang sein.

Eine nach dieser technischen Lehre ausgebildete Zugdeichsel hat den Vorteil eines besonders großen Einstellungsbereiches, der beispielsweise dann notwendig ist, wenn der Anhänger wahlweise an einen Lastwagen oder einen Personenkraftwagen angekuppelt werden muß.

Weitere Einzelheiten des Gegenstandes der Erfindung ergeben sich aus der nachfolgenden Beschreibung der zugehörigen Zeichnung, in der eine bevorzugte Ausführungsform einer erfindungsgemäß ausgebildeten Zugdeichsel mit einem höhenverstellbaren Zwischenstück dargestellt ist. In der Zeichnung zeigt:

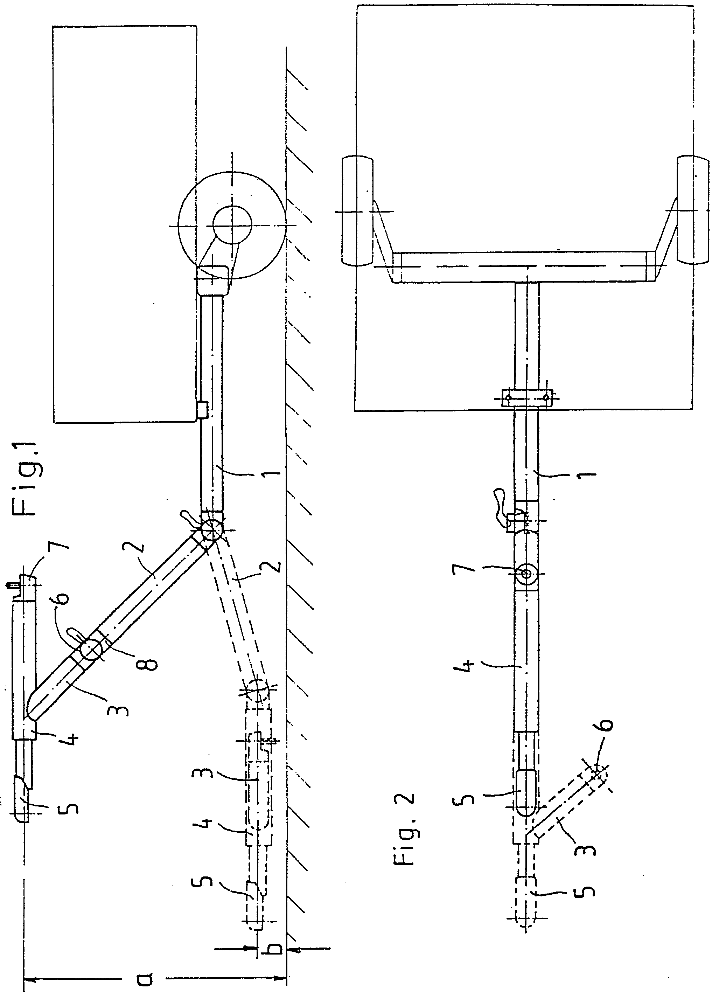

Fig. 1 eine Zugdeichsel in der höchsten und niedrigsten (gestrichelt) Einstellung in Seitenansicht und

Fig. 2 dieselbe Zugdeichsel in Draufsicht.

Am vorderen Ende einer Zugdeichsel 1 ist ein höhenverstellbares Zwischenstück 2 befestigt, welches an seinem vorderen Ende ein Nebenträgerstück 3 eines Zugösenträgers mit einem Trägerstück 4 für eine drehbare Zugöse 5 trägt.

Am rückwärtigen Ende des Nebenträgerstücks 3 und des Trägerstücks 4 sind Kupplungshälften 6 und 7 zueinander senkrecht angeordnet, die mit einer entsprechenden Kupplungshälfte 8 an dem Zwischenstück 2 verbunden werden können.

In der mit ausgezogen Linien dargestellten obersten Höhenlage a ist die Kupplungshälfte 6 des Nebenträgerstücks 3 mit dem Zwischenstück 2 verbunden. In der gestrichelt dargestellten untersten Höhenlage b ist die Kupplungshälfte 7 des Trägerstücks 4 mit dem Zwischenstück 2 verbunden. Das Nebenträgerstück 3 steht dann in waagerechter Richtung seitlich ab, so daß sich die Zugöse 5 sehr dicht über dem Boden befindet.

Bezugszeichenliste
1 Zugdeichsel
2 Zwischenstück
3 Nebenträgerstück
4 Trägerstück
5 Zugöse
6 Kupplungshälfte
7 Kupplungshälfte
8 Kupplungshälfte

## Patentansprüche

1. Zugdeichsel für Anhänger mit einem höhenverstellbaren Zwischenstück (2) und einem daran befestigten Zugösenträger für eine drehbare Zugöse (5), wobei das Zwischenstück (2) und der Zugösenträger mit entsprechend geformten und sich an Kupplungsflächen abstützenden Kupplungshälften zu einer Kupplung verbunden sind, dadurch gekennzeichnet, daß der Zugösenträger mit zwei Kupplungshälften (6, 7) mit senkrecht zueinander angeordneten Kupplungsflächen für eine wahlweise Verbindung mit der Kupplungshälfte (8) des Zwischenstücks (2) versehen ist, von denen eine Kupplungshälfte (7) am rückwärtigen Ende eines Trägerstückes des Zugösenträgers und die andere Kupplungshälfte (6) am Ende eines vom Trägerstück (4) rückwärtig in einem spitzen Winkel abzweigenden Nebenträgerstücks (3) des Zugösenträgers angeordnet ist.

2. Zugdeichsel nach Anspruch 1, dadurch gekennzeichnet, daß das Trägerstück (4) und das Nebenträgerstück (3) des Zugösenträgers annähernd gleich lang sind.

## Claims

1. A drawbar for trailers, the drawbar having a vertically adjustable intermediate member (2) and, secured thereto, a coupling ring carrier for a rotatable trailer coupling ring (5), the intermediate member (2) and the coupling ring carrier being connected to form a coupling to correspondingly shaped coupling halves which bear on coupling surfaces, characterised in that the coupling ring carrier has two coupling ring halves (6, 7) having coupling surfaces which are disposed perpendicularly to one another and which are adapted for selective connection to the coupling half (8) of the intermediate member (2), one coupling half (7) being disposed at the rearward end of a support member of the ring coupling carrier while the other coupling half (6) is disposed at the end of an auxiliary support member (3) of the coupling ring carrier, the auxiliary support member (3) branching off rearwardly from the support member (4) at an acute angle.

2. A drawbar according to claim 1, characterised in that the support member (4) and the auxiliary support member (3) of the coupling ring carrier are of substantially the same length.

## Revendications

1. Timon d'attelage pour remorque avec un élément intermédiaire (2) réglable en hauteur et un porte-anneau d'attelage fixé à celui-ci et supportant un anneau d'attelage libre en rotation (5), sur lequel l'élément intermédiaire (2) et le porte-anneau d'attelage sont reliés en un accouplement au moyen de moitiés d'accouplement conformées en conséquence et s'appuyant sur des faces d'accouplement, caractérisé en ce que le porte-anneau d'attelage est pourvu de deux moitiés d'accouplement (6, 7) avec des faces d'accouplement disposées perpendiculairement entre elles pour une liaison à volonté avec la moitié d'accouplement (8) de l'élément intermédiaire (2), dont une moitié d'accouplement (7) est disposée à l'extrémité arrière d'un élément support d'un porte-anneau d'attelage et dont l'autre moitié d'accouplement (6) est disposée à l'extrémité d'un élément support annexe (3) du porte-anneau d'attelage, qui se détache vers l'arrière de l'élément support (4) en formant un angle aigu avec celui-ci.

2. Timon d'attelage selon la revendication 1, caractérisé en ce que l'élément support (4) et l'élément support annexe (3) du porte-anneau d'attelage sont de longueur sensiblement égale.

Fig.1

Fig. 2